# FASCICULE DE BREVET EUROPEEN

(11) **EP 0 604 781 B1**
(45) Date de publication et mention de la délivrance du brevet: **01.10.1997**
(21) Numéro de dépôt: 93119523.4
(22) Date de dépôt: 03.12.1993
(51) Int. Cl.: H05B 6/80, F24C 15/16, H05B 6/64, A47J 37/04

(54) **Support de préparations alimentaires destiné à équiper un four**
Nahrungsmittelzubereitungsträger zum Ausrüsten eines Ofens
Support for food preparations for equiping an oven

(30) Priorité: 03.12.1992 FR 9214585
(43) Date de publication de la demande: 06.07.1994
(73) Titulaire: MOULINEX S.A., F-93170 Bagnolet (FR)
(72) Inventeur: Aurensan, Jean-Claude, F-14700 Falaise (FR); Boivin, Philippe, F-14416 Colombelles (FR)
(74) Mandataire: May, Hans Ulrich, Dr.

(56) Documents cités:
- EP-A- 0 109 267
- PATENT ABSTRACTS OF JAPAN vol. 9, no. 92 (M-373) 20 Avril 1985 & JP-A-59 217 427 (MATSUSHITA DENKI SANGYO KK) 7 Décembre 1984
- PATENT ABSTRACTS OF JAPAN vol. 11, no. 330 (M-636) 28 Octobre 1987 & JP-A-62 112 928 (MATSUSHITA ELECTRIC IND CO) 23 Mai 1987

## Description

L'invention se rapporte à un support pour préparations alimentaires destiné à équiper un four et plus particulièrement un four à micro-ondes, comprenant un plateau ayant une face inférieure de repos et une face supérieure destinée à supporter des aliments, et une grille munie de pieds reposant sur le plateau et destinée à supporter des aliments.

On connaît des supports pour préparations alimentaires comprenant un plateau inférieur et une grille supérieure munie de pieds reposant sur le plateau. Or, pour assurer la stabilité d'une telle grille en dépit d'un positionnement décentré des aliments, il faut soit augmenter la surface d'appui des pieds, soit multiplier le nombre des pieds, ce qui empêche un accès facile au plateau inférieur pour y déposer également des aliments.

Par ailleurs, les dispositifs connus où la grille supérieure munie de pieds repose sur le plateau inférieur, présentent des risques lors de leur manipulation. En effet, lorsque l'utilisateur saisit le dispositif par le plateau inférieur, la grille risque de glisser sur le plateau inférieur et de se renverser si le plateau n'est pas maintenu parfaitement horizontal, ce qui peut être d'autant plus dangereux que la grille est susceptible de porter des denrées brûlantes.

On connaît également, d'après le document EP-A-0 109 267, un support pour préparations alimentaires comprenant un plateau inférieur et plusieurs étages de grille amovible qui sont supportés par le plateau au moyen d'un châssis comportant un montant horizontal formant embase qui repose sur le bord périphérique supérieur du plateau en étant maintenu en place sur celui-ci à l'aide d'un crochet, un montant vertical arrière soudé sur le montant formant embase et adapté à supporter de manière amovible le bord arrière de chaque grille, et deux montants latéraux dont chacun est soudé à ses deux extrémités, respectivement sur le montant formant embase et sur le montant arrière, et est adapté à supporter de manière amovible le bord latéral de chaque grille.

L'invention a pour but la réalisation économique d'un support pour préparations alimentaires comprenant un plateau inférieur et une grille supérieure munie de pieds qui permettent d'éviter les problèmes rencontrés sur les dispositifs existants, c'est-à-dire le support doit permettre un accès facile au plateau inférieur, un encombrement réduit des pieds de la grille supérieure venant en contact avec le plateau inférieur, une parfaite stabilité de la grille supérieure quel que soit l'emplacement des aliments sur celle-ci et une parfaite stabilité de la grille supérieure sur le plateau inférieur.

Selon l'invention, chaque pied de la grille possède un organe de fixation propre à fixer directement et de manière amovible ledit pied sur la périphérie du plateau.

Ainsi, avec un nombre minimum de pieds, on assure une parfaite stabilité de la grille supérieure.

Les caractéristiques, détails et avantages de l'invention ressortiront d'ailleurs de la description qui va suivre, à titre d'exemple, en référence aux dessins annexés dans lesquels :
- la figure 1 est une représentation en perspective d'une réalisation du support pour préparations alimentaires,

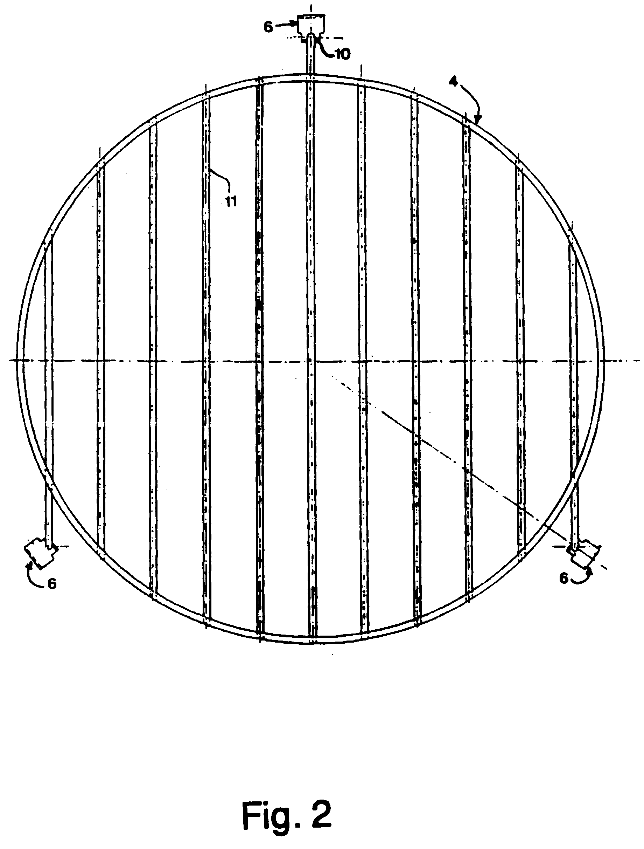

- la figure 2 représente une vue de dessus à échelle agrandie de la grille supérieure ;
- la figure 3 représente une vue de côté de la grille ;
- les figures 4a et 4b représentent à échelle agrandie une vue détaillée des organes de fixation en prise sur le plateau.

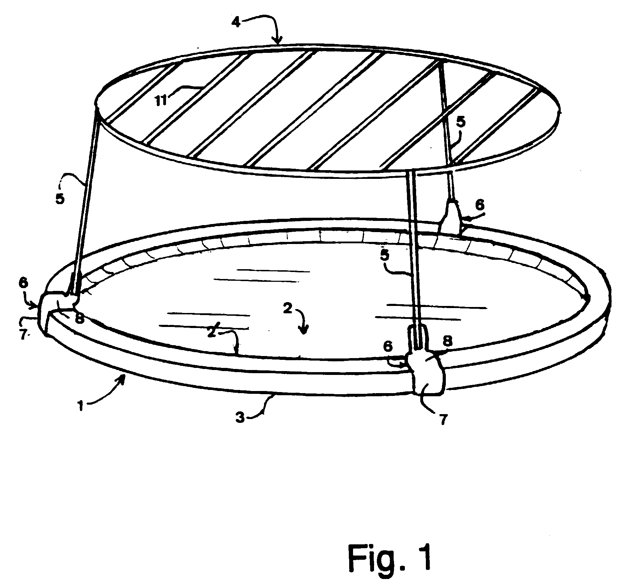

Comme cela apparaît sur la figure 1, le support pour préparations alimentaires comprend un plateau 1 comportant une face supérieure 2 destinée à supporter des aliments et une face inférieure 3 de repos, et une grille 4 destinée à reposer sur le plateau 1 au moyen de pieds 5.

Les pieds comprennent des organes de fixation amovible 6 sur la périphérie du plateau.

Avantageusement, un tel support pour préparations alimentaires pourra constituer le "plateau tournant" d'un four à micro-ondes et ce, particulièrement si le plateau et la grille sont, comme représentés, à bords circulaires.

La fixation de la grille 4 étant amovible, on peut envisager une utilisation séparée de la grille 4 et du plateau 1. La grille 4 peut être posée sur une table pour le service et le plateau 1 peut être mis dans le four sans la grille 4.

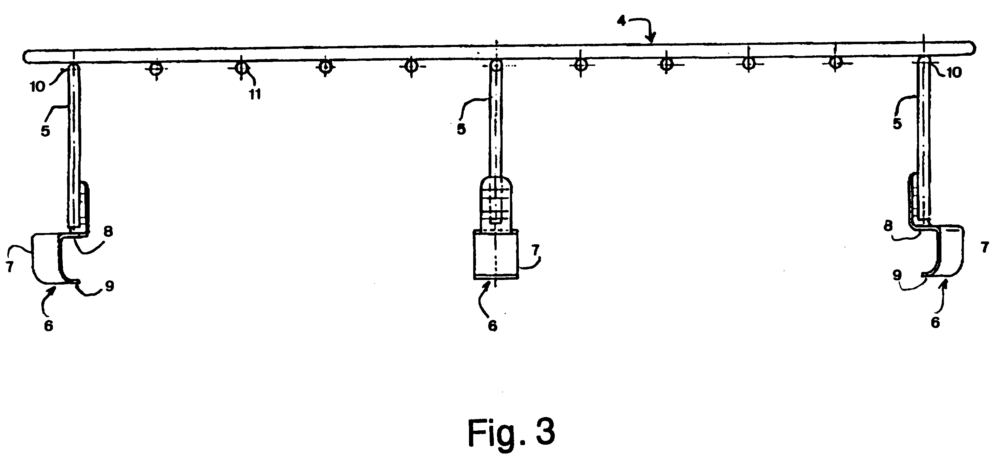

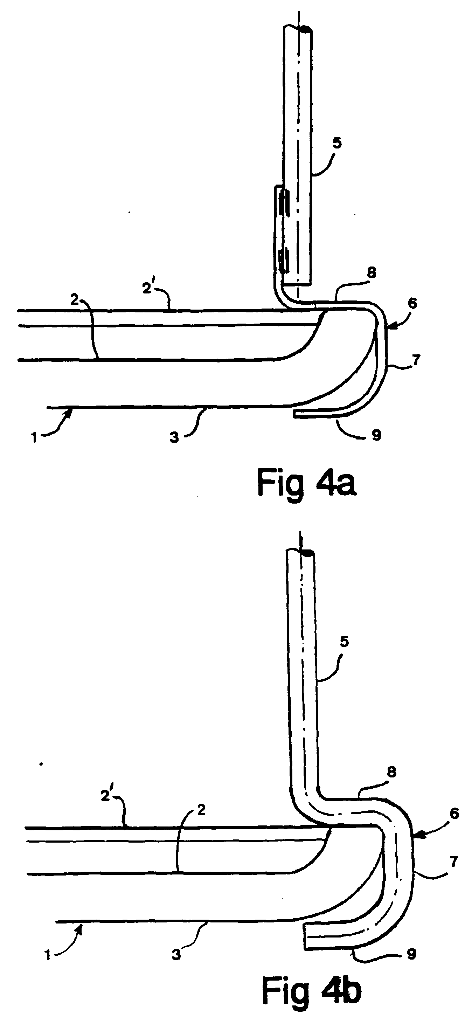

Comme le montrent les figures 3, 4a et 4b, les organes de fixation 6 comprennent des crochets 7 destinés à venir en prise avec la périphérie du plateau 1.

La fixation des crochets à la périphérie permet avantageusement de réduire l'encombrement du plateau 1.

Les crochets 7 comportent une partie 8 destinée à venir en appui sur le bord périphérique 2' de la face supérieure 2 du plateau 1 et une partie 9 destinée à venir s'accrocher sous la face inférieure 3.

Une telle fixation est particulièrement sûre dans la mesure où on peut saisir le support de préparations alimentaires, soit par le plateau 1, soit par la grille 4, sans risquer, lors d'un faux mouvement, que l'un des deux éléments ne glisse ni ne se renverse.

Pour une mise en place et un retrait aisé de la grille 4, les pieds 5 de la grille 4 comprennent au moins une partie 10 flexible de manière à exercer sur les crochets des forces orientées vers le centre du plateau et destinées à maintenir lesdits crochets en contact avec le plateau 1 ; ainsi les pieds 5 viennent s'emboîter et se serrer contre le bord 2' du plateau 1.

Une simple traction exercée sur les crochets 7 permet de les écarter du bord 2' du plateau sur lequel ils sont en prise et ainsi, la grille 4 et le plateau 1 sont désolidarisés.

Dans une réalisation intéressante, les pieds sont constitués par des tiges métalliques.

Plus avantageusement encore, la grille 4 est une grille à barreaux réalisés en tiges métalliques 11 dont certaines comportent un prolongement constituant les pieds.

Le prolongement des tiges est coudé pour réaliser les pieds, et ce coude confère au pied l'élasticité adéquate pour exercer une force centripète sur chaque crochet.

Comme on peut le voir sur les figures 3 et 4a, chaque crochet peut être réalisé à partir d'une plaquette métallique dont une extrémité est soudée à un pied.

Une autre solution conforme à la figure 4b consiste à réaliser directement le crochet dans le prolongement de la tige métallique constituant le pied en conformant cette extrémité en forme de **C**, de manière à obtenir une partie 8 d'appui et un partie 9 d'accrochage.

Pour une utilisation du support dans un four à micro-ondes, on retiendra des réalisations simples de la fixation de manière à éviter tout arc électrique.

Dans un souci d'isolation, le plateau 1 est réalisé en verre.

Finalement, et grâce à une réalisation selon l'invention, le support pour préparations alimentaires est à la fois stable quel que soit le positionnement des aliments sur la grille 4, le plateau 1 et la grille 4 restent mutuellement solidaires, ce qui évite tout risque de renversement de la grille 4, particulièrement lorsqu'on retire le support pour préparations alimentaires du four. Par ailleurs, le montage et le démontage de la grille 4 sont particulièrement aisés car la fixation est élastique.

La réalisation simple de la structure la rend en outre particulièrement adaptée à une réalisation économique en grande série.

## Revendications

1. Support pour préparations alimentaires destiné à équiper un four et plus particulièrement un four à micro-ondes, comprenant un plateau (1) ayant une face inférieure (3) de repos et une face supérieure (2) destinée à supporter des aliments, et une grille (4) munie de pieds (5) reposant sur le plateau (1) et destinée à supporter des aliments,
**caractérisé en ce que** chaque pied (5) de la grille (4) possède un organe de fixation (6) propre à fixer directement et de manière amovible ledit pied sur la périphérie du plateau (1).

2. Support pour préparations alimentaires selon la revendication 1,
**caractérisé en ce que** l'organe de fixation (6) de chaque pied (5) comprend un crochet (7) venant en prise avec la périphérie du plateau (1).

3. Support pour préparations alimentaires selon la revendication 2,
**caractérisé en ce que** le crochet (7) de chaque pied (5) comporte une partie (8) venant en appui sur le bord périphérique (2') de la face supérieure (2) du plateau (1), et une partie (9) venant s'accrocher sous la face inférieure (3) dudit plateau (1).

4. Support pour préparations alimentaires selon la revendication 2 ou 3,
**caractérisé en ce que** chaque pied (5) de la grille (4) comprend au moins une partie flexible (10) de manière à exercer sur le crochet (7) une force orientée vers le centre du plateau (1) et destinée à maintenir ledit crochet (7) en contact avec le plateau (1).

5. Support pour préparations alimentaires selon l'une des revendications 1 à 4,
**caractérisé en ce que** chaque pied (5) de la grille (4) est constitué par une tige métallique.

6. Support pour préparations alimentaires selon la revendication 5,
**caractérisé en ce que** la grille (4) est une grille à barreaux réalisés en tiges métalliques (11) dont certaines comportent un prolongement constituant les pieds (5).

7. Support pour préparations alimentaires selon la revendication 5,
**caractérisé en ce que** chaque crochet (7) est réalisé à partir d'une plaquette métallique dont une extrémité est soudée à un pied (5).

8. Support pour préparations alimentaires selon l'une des revendications précédentes,
**caractérisé en ce que** le plateau (1) est réalisé en verre.

## Patentansprüche

1. Träger für Nahrungsmittelzubereitungen zur Ausstattung eines Ofens, besonders eines Mikrowellenofens, der ein Tablett (1) mit einer unteren Auflagefläche (3) und einer oberen Fläche (2), die die Nahrungsmittel trägt, sowie einen Rost (4) aufweist, der mit auf dem Tablett (1) ruhenden Füßen (5) ausgestattet ist und Nahrungsmittel trägt, **dadurch gekennzeichnet, daß** jeder Fuß (5) des Rosts (4) ein Element (6) zur direkten und abnehmbaren Befestigung des Fußes am Umfang des Tabletts (1) aufweist.

2. Träger für Nahrungsmittelzubereitungen nach Anspruch 1, **dadurch gekennzeichnet, daß** das Befestigungselement (6) jedes Fußes (5) einen Haken (7) aufweist, der mit dem Umfang des Tabletts (1) in Eingriff kommt.

3. Träger für Nahrungsmittelzubereitungen nach Anspruch 2, **dadurch gekennzeichnet, daß** der Haken (7) jedes Fußes (5) einen Teil (8), der auf dem Umfangsrand (2') der oberen Fläche (2) des Tabletts (1) aufliegt, und einen Teil (9) aufweist, der sich unter der unteren Fläche (3) des Tabletts (1) festhakt.

4. Träger für Nahrungsmittelzubereitungen nach Anspruch 2 oder 3, **dadurch gekennzeichnet, daß** jeder Fuß (5) des Rosts (4) mindestens einen flexiblen Bereich (10) aufweist, so daß auf den Haken (7) eine in die Mitte des Tabletts (1) gerichtete Kraft ausgeübt wird, die den Haken (7) in Kontakt mit dem Tablett (1) hält.

5. Träger für Nahrungsmittelzubereitungen nach einem der Ansprüche 1 bis 4, **dadurch gekennzeichnet, daß** jeder Fuß (5) des Rosts (4) durch einen Metallstab gebildet ist.

6. Träger für Nahrungsmittelzubereitungen nach Anspruch 5, **dadurch gekennzeichnet, daß** der Rost (4) ein Stabrost aus Metallstäben (11) ist, von denen einige die Füße (5) bildende Verlängerungen aufweisen.

7. Träger für Nahrungsmittelzubereitungen nach Anspruch 5, **dadurch gekennzeichnet, daß** jeder Haken (7) aus einem Metallplättchen ausgebildet ist, dessen eines Ende an einen Fuß (5) angeschweißt ist.

8. Träger für Nahrungsmittelzubereitungen nach einem der vorangehenden Ansprüche, **dadurch gekennzeichnet, daß** das Tablett (1) aus Glas ausgebildet ist.

## Claims

1. Support for food preparations designed to equip an oven and more especially a microwave oven, comprising a plate (1) which has a bottom rest face (3) and a top face (2) designed to support foodstuffs, and a grid (4) provided with feet (5) resting on the plate (1) and designed to support foodstuffs,
**characterised in that** each foot (5) of the grid (4) has a fixing device (6) able to fix the said foot directly and removably on the periphery of the plate (1).

2. Support for food preparations according to Claim 1,
**characterised in that** the fixing device (6) of each foot (5) comprises a hook (7) engaged with the periphery of the plate (1).

3. Support for food preparations according to Claim 2,
**characterised in that** the hook (7) of each foot (5) has a part (8) bearing on the peripheral edge (2') of the top face (2) of the plate (1), and a part (9) hooked under the bottom face (3) of the said plate (1).

4. Support for food preparations according to Claim 2 or 3,
**characterised in that** each foot (5) of the grid (4) comprises at least one flexible part (10) so as to exert on the hook (7) a force oriented towards the centre of the plate (1) and designed to hold the said hook (7) in contact with the plate (1).

5. Support for food preparations according to one of Claims 1 to 4,
**characterised in that** each foot (5) of the grid (4) consists of a metal rod.

6. Support for food preparations according to Claim 5,
**characterised in that** the grid (4) is a bar grid produced from metal rods (11), some of which have an extension forming the feet (5).

7. Support for food preparations according to Claim 5,
**characterised in that** each hook (7) is produced from a metal plate, one end of which is welded to a foot (5).

8. Support for food preparations according to one of the preceding claims,
**characterised in that** the plate (1) is produced from glass.
